## Europäisches Patentamt
## European Patent Office
## Office européen des brevets

(19)

(11) Numéro de publication : **0 118 322 B1**

(12) **FASCICULE DE BREVET EUROPÉEN**

(45) Date de publication du fascicule du brevet :
06.05.87

(51) Int. Cl.⁴ : **F 16 B 37/02**

(21) Numéro de dépôt : **84400061.2**

(22) Date de dépôt : **12.01.84**

(54) Attache perfectionnée formant écrou.

(30) Priorité : **07.02.83 US 464298**

(43) Date de publication de la demande :
**12.09.84 Bulletin 84/37**

(45) Mention de la délivrance du brevet :
**06.05.87 Bulletin 87/19**

(84) Etats contractants désignés :
**AT BE CH DE FR GB IT LI LU NL SE**

(56) Documents cités :
**BE-A- 722 917**
**CH-A- 519 116**
**DE-A- 2 617 940**
**GB-A- 2 102 905**
**US-A- 2 797 720**

(73) Titulaire : **EATON CORPORATION**
**100 Erieview Plaza**
**Cleveland Ohio 44114 (US)**

(72) Inventeur : **Oehike, Donald Nelson**
**2700 Lanergan Avenue**
**Troy Michigan 48084 (US)**

(74) Mandataire : **Durand, Yves Armand Louis et al**
**Cabinet Z. Weinstein 20, Avenue de Friedland**
**F-75008 Paris (FR)**

Jouve, 18, rue St-Denis, 75001 Paris, France

**Description**

La présente invention se rapporte d'une manière générale à une attache pour fixer un élément fileté tel qu'une vis ou un boulon sur un article tel que par exemple une plaque, un panneau ou analogue.

On connaît déjà des attaches du type ci-dessus et qui peuvent être insérées par clippage sur le rebord d'un panneau auquel on peut fixer ensuite un autre panneau après passage d'une vis au travers de l'attache et des deux panneaux.

C'est ainsi que dans le document US-A-4 440 535 (publié le 03.04.1984), une attache répondant à la définition ci-dessus est décrite.

Plus précisément, cette attache comprend une embase se prolongeant par un ou deux bras élastiques repliés pour former avec l'embase un clip apte à pincer le bord d'un panneau, ladite embase comportant une fente allongée ainsi que deux branches élastiques qui s'étendent à partir de l'embase de chaque côté de cette fente puis se rapprochent au-dessus de l'embase de manière que les bords libres des branches définissent entre eux un espace allongé en alignement avec la fente allongée de l'embase.

Cette attache permet à un élément fileté, tel que par exemple une vis, de se déplacer dans une ouverture allongée du panneau auquel est fixée l'attache, et d'être reçu d'une part dans la fente de l'embase et d'autre part entre les bords libres des branches élastiques, pour ainsi permettre la fixation de l'attache en raison du contact des bords libres des branches élastiques et des bords de la fente de l'embase avec les filets de l'élément fileté.

Toutefois, les bords des branches élastiques et de la fente sont rectilignes, de sorte que l'engagement du filetage de l'élément fileté avec ces bords ne procure pas le degré de fixation désiré entre l'élément fileté et l'attache.

On connaît aussi, d'après le document US-A-2 797 720, une attache comprenant une embase se prolongeant par un bras élastique replié pour former avec l'embase un clip apte à pincer le bord d'un panneau. Le bras élastique permet le passage d'un élément fileté, tandis que l'embase comporte une ouverture avec des branches à bords crantés qui s'étendent de chaque côté de cette ouverture au-dessus de l'embase pour coopérer avec l'élément fileté. Toutefois, l'élément fileté ne coopère pas positivement avec l'ouverture de l'embase, et l'assemblage à réaliser peut présenter des défauts de solidité en raison du fait que l'élément fileté n'est vissé qu'au niveau des branches à bords crantés.

Aussi, la présente invention a pour but de proposer une attache perfectionnée qui remédie aux inconvénients ci-dessus et permet une fixation rigide et sans déplacements relatifs de l'élément fileté dans l'attache.

A cet effet, l'invention a pour objet une attache perfectionnée en une seule pièce pour fixer un élément extérieurement fileté, tel qu'une vis, sur un panneau ou analogue par l'intermédiaire d'un orifice allongé ménagé au travers de ce panneau, cette attache étant du type comprenant une embase se prolongeant par au moins un bras élastique replié pour former avec l'embase un clip apte à pincer le bord du panneau, ladite embase comportant une ouverture allongée, ainsi que deux branches élastiques qui s'étendent à partir de l'embase de chaque côté de cette ouverture puis se rapprochent au-dessus de l'embase de manière que les bords libres des branches définissent entre eux un espace allongé sensiblement en alignement avec l'ouverture allongée de l'embase, caractérisée en ce que les bords libres des branches et les bords opposés de l'ouverture allongée comportent chacun une pluralité de parties en forme d'encoches arquées se faisant face en alignement axial l'une avec l'autre pour que l'élément fileté vienne en engagement de vissage avec deux encoches arquées de l'ouverture allongée puis avec deux encoches arquées correspondantes entre les bords libres des branches élastiques.

Suivant une autre caractéristique de cette attache, le bras élastique prolongeant l'embase est divisé en deux bras s'étendant respectivement aux extrémités opposées de l'ouverture allongée de l'embase et suivant une direction orthogonale à cette ouverture pour laisser entre elles le passage à l'élément fileté.

On comprend donc que, de cette façon, la fixation de l'élément fileté sur l'attache est renforcée, par le fait que non seulement les branches élastiques de l'attache, mais aussi l'ouverture allongée de l'embase viennent en prise avec l'élément fileté suivant un contact de surface circonférentiel.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en perspective d'un mode de réalisation d'attache selon l'invention.

La figure 1A est une vue en perspective partielle d'un panneau sur lequel l'attache de la figure 1 peut être fixée.

La figure 2 est une vue en perspective partielle d'un panneau qui peut être fixé au panneau de la figure 1A au moyen de l'attache de la figure 1 ; et

La figure 3 est une vue en élévation et coupe transversale de l'attache de la figure 1 fixant ensemble les panneaux des figures 1A et 2 au moyen d'un élément extérieurement fileté, tel qu'une vis.

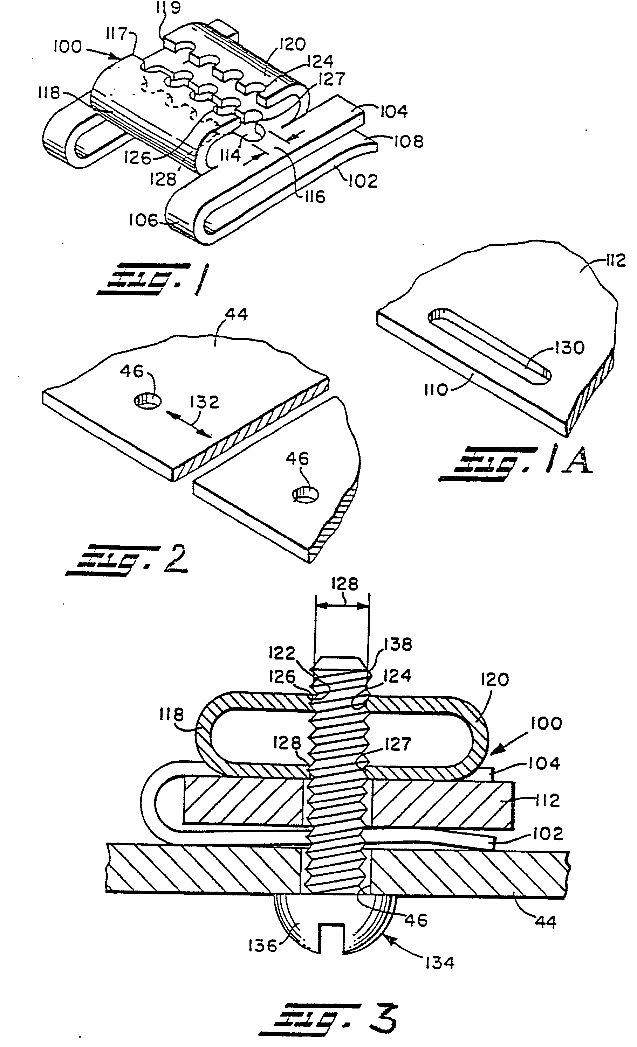

L'attache 100 comporte une embase 104 avec une fente allongée 114 comportant deux bords sensiblement parallèles qui ne sont pas repérés et qui peuvent venir en prise avec le filetage d'un élément fileté inséré au travers de la fente 114. On prévoit deux bras 102 pour l'attache 100, lesquels bras prolongent l'embase 104, comme on le voit en 106 et s'étendent à partir d'un côté transversal de l'embase 104 en direction de l'article jusqu'à des extrémités libres respectives 108 qui sont espacées de l'embase 104 pour réaliser un clip à extrémité ouverte apte à recevoir le rebord 110 du panneau 112 de la figure 1A, de façon à pouvoir fixer l'attache 100 sur le panneau 112 par coopération entre les bras 102 et l'embase 104. Les bras 102 sont espacés l'un de l'autre transversalement à l'embase 104 sur les extrémités opposées de la fente 114 pour laisser entre eux un passage permettant à l'élément fileté d'être inséré au travers de l'ouverture allongée 130 du panneau 112 et d'être reçu entre les bords de la fente 114. On observera ici que l'ouverture 130 est sensiblement parallèle au bord 110 du panneau 112 et que les bras 102 sont orientés par rapport à la fente 114 de l'embase 104, de telle façon que ladite fente 114 et l'ouverture 130 soient alignées lorsque l'attache 100 est clippée sur le bord 110 du panneau 112.

L'attache 100 comporte une paire de branches élastiques 118 et 120 qui s'étendent depuis l'embase 104 sur les côtés opposés de la fente 114 jusqu'à des extrémités libres 117 et 119 qui sont espacées l'une de l'autre et sont situées en vis-à-vis et au-dessus de l'embase 104, de façon à réaliser entre elles un espace allongé qui est aligné avec la fente 114 de l'embase 104. Les extrémités libres 117 et 119 comprennent une pluralité de parties courbes concaves espacées et opposées 124 et 126 dont les extrémités ouvertes se font face de façon à réaliser une pluralité d'ouvertures aptes à venir en prise avec des parties circonférentielles opposées du filetage de l'élément fileté.

Sur les côtés opposés de l'embase 104 et dans les bords opposés de la fente 114, il y a une pluralité de parties courbes concaves opposées et espacées correspondantes 127 et 128 qui ont leurs côtés ouverts se faisant face respectivement de façon à réaliser une pluralité d'ouvertures arquées et espacées. Les parties courbes de chaque ouverture peuvent venir en prise avec des parties circonférentielles opposées du filetage de l'élément fileté introduit dans ladite ouverture. Chaque ouverture de la fente 114 est alignée sensiblement axialement avec une ouverture correspondante entre les extrémités libres 117 et 119, de sorte qu'un élément fileté peut être déplacé le long de la fente 114, puis inséré dans l'une des ouvertures associées à cette fente, et enfin reçu dans une ouverture correspondante entre les extrémités libres 117 et 119. Ainsi l'attache 100 permet aux parties courbes des ouvertures ménagées dans la fente 114 et entre les extrémités libres 117 et 119, de venir en prise avec des parties circonférentielles opposées du filetage de l'élément fileté de façon à réaliser un engagement ou un contact de surface plutôt qu'un contact ponctuel ce qui renforce grandement la fixation de l'élément fileté à l'attache 100.

La figure 2 montre un panneau 44 qui peut être fixé au panneau 112 de la figure 1A au moyen de l'attache 100 par l'intermédiaire de l'un des orifices espacés 46 dans le panneau 44 ou par l'intermédiaire des deux orifices 46 dont l'espacement 132 est moindre que la longueur de l'orifice 130 dans le panneau 112 et de la fente 114 dans l'embase 104. L'attache de l'invention permet un certain degré de défaut d'alignement entre les orifices dans les panneaux 44 et 112 en raison de la possibilité pour l'élément fileté de se déplacer le long de la fente dans l'embase.

La figure 3 illustre la fixation du panneau 44 de la figure 2 au panneau 112 de la figure 1A au moyen de l'attache 100 et de la vis 134 possédant un filetage 138 et une tête rainurée 136. L'attache 100 est clippée sur un rebord du panneau 112 grâce au bras 102 s'étendant depuis l'embase 104 comme décrit précédemment. L'attache 100 est montée de façon telle que la fente 114 (non représentée sur la figure 3) de l'embase 104 est en alignement avec l'orifice 130 (non représenté sur la figure 3) du panneau 112. La vis 134 est insérée dans l'orifice 46 et passe au travers du passage entre les bras 102, de sorte que le filetage 138 vient en prise avec les parties courbes 127 et 128 de l'une des ouvertures arquées de la fente 114. Puis, par rotation de la vis 134 autour de son axe, ladite vis 134 avance au travers d'une ouverture correspondante entre les extrémités libres des branches 118 et 120, de sorte que le filetage 138 vient en prise avec les parties courbes 124 et 126 d'une ouverture correspondante dans les branches 118 et 120. Les parties courbes coopèrent l'une avec l'autre et le vissage procure une traction sur ces parties, de sorte que des surfaces circonférentielles opposées de ces parties viennent en prise avec le filetage 138 qui possède un diamètre repéré en 128, de manière à fixer la vis 134 à l'attache 100 et aux panneaux 44 et 112 comme décrit précédemment.

Bien que l'attache de l'invention puisse être fabriquée en plusieurs parties, ladite attache est de préférence réalisée en une seule pièce emboutie à partir d'une feuille en plastique ou métal appropriée, tandis que les bras et les branches élastiques précédemment décrits sont repliés de la manière représentée sur les figures.

Bien entendu, l'invention n'est nullement limitée aux modes de réalisation décrits et illustrés qui n'ont été donnés qu'à titre d'exemple.

**Revendications**

1. Attache (100) perfectionnée en une seule pièce pour fixer un élément extérieurement fileté (134), tel qu'une vis, sur un panneau (44, 112) ou analogue par l'intermédiaire d'un orifice allongé (130) ménagé au travers de ce panneau, cette attache étant du type comprenant une embase (104) se prolongeant par au moins un bras élastique (102) replié pour former avec l'embase un clip apte à pincer le bord du panneau, ladite embase comportant une ouverture allongée (114), ainsi que deux branches élastiques (118, 120) qui s'étendent à partir de l'embase de chaque côté de cette ouverture puis se rapprochent au-dessus de l'embase de manière que les bords libres (117, 119) des branches, définissent entre eux un espace allongé sensiblement en alignement avec l'ouverture allongée de l'embase, caractérisée en ce que les bords libres (117, 119) des branches et les bords opposés de l'ouverture allongée (114) comportent chacun une pluralité de parties en forme d'encoches arquées (124, 126, 127, 128) se faisant face en alignement axial l'une avec l'autre pour que l'élément fileté (134) vienne en engagement de vissage avec deux encoches arquées (127, 128) de l'ouverture allongée (114) puis avec deux encoches arquées correspondantes (124, 126) entre les bords libres (117, 119) des branches élastiques.

2. Attache selon la revendication 1, caractérisée en ce que le bras élastique prolongeant l'embase (104) est divisé en deux bras (102) s'étendant respectivement aux extrémités opposées de l'ouverture allongée (114) de l'embase et suivant une direction orthogonale à cette ouverture pour laisser entre elles le passage à l'élément fileté (134).

## Claims

1. Improved fastener (100) made in one piece for fixing an externally threaded element (134) such as a screw onto a panel (44, 112) or the like through the medium of an oblong opening (130) provided through this panel, this fastener being of the kind comprising a base (104) extended by at least one resilient arm (102) folded back to form with the base a clip suitable for clamping the edge of the panel, the said base including an elongated opening (114) as well as two resilient legs (118, 120) which extend from the base on either side of this opening and then draw nearer above the base so that the free limb edges (117, 119) of the legs define therebetween an elongated space in substantial alignment with the elongated opening of the base, characterized in that the free edges (117, 119) of the legs and the opposite edges of the elongated opening (114) comprise a plurality of portions in shape of arcuate notches (124, 126, 127, 128) facing each other in axial alignment with each other in order that the threaded element (134) come in screwing engagement with two arcuate notches (124, 126, 127, 128) of the elongated opening (114) and then with two corresponding arcuate notches (124, 126) between the free edges (117, 119) of the resilient legs.

2. Fastener according to claim 1, characterized in that the resilient arm extending the base (104) is divided into two arms (102) extending at the opposite ends, respectively, of the elongated opening (114) of the base and along a direction orthogonal to this opening to let the threaded element (134) pass therebetween.

## Patentansprüche

1. Verbesserte einstückige Klammer (100), um ein mit einem Aussengewinde versehenes Glied (134) wie einer Schraube an einer Platte (44, 112) oder dergleichen über eine durch diese Platte hindurch gebildete längliche Öffnung (130) zu befestigen, wobei diese Klammer derjenigen Gattung ist, die eine sich durch wenigstens einen elastischen Arm (102) verlängerte Grundleiste (104) besitzt, welcher umgebogen ist, um mit der Grundleiste eine zum Einklemmen des Plattenrandes geeignete Klemme zu bilden, wobei die besagte Grundleiste eine längliche Öffnung (114) sowie zwei elastische Schenkel (118, 120) aufweist, die sich von der Grundleiste aus zu beiden Seiten dieser Öffnung erstrecken und dann oberhalb der Grundleiste derart nähern, dass die freien Ränder (117, 119) der Schenkel dazwischen einen mit der länglichen Öffnung der Grundleiste im wesentlichen fluchtenden länglichen Raum abgrenzen, dadurch gekennzeichnet, dass die freien Ränder (117, 119) der Schenkel und die gegenüberliegenden Ränder der länglichen Öffnung (114) je eine Mehrzahl von axial fluchtend einander zugewandten, als bogenförmige Aussparungen gestalteten Teilen (124, 126, 127, 128) aufweisen, damit das Gewindeglied (134) mit zwei bogenförmigen Aussparungen (127, 128) der länglichen Öffnung (114) und dann mit zwei entsprechenden bogenförmigen Aussparungen (124, 126) zwischen den freien Rändern (117, 119) der elastischen Schenkel in Schraubeingriff kommt.

2. Klammer nach Anspruch 1, dadurch gekennzeichnet, dass der die Grundleiste (104) verlängernde elastische Arm (102) in zwei sich jeweils an den entgegengesetzten Enden der länglichen Öffnung (114) der Grundleiste und senkrecht zu dieser Öffnung erstreckenden Arme (102) unterteilt ist, um dazwischen das Gewindeglied (134) durchzulassen.

FIG. 1

FIG. 1A

FIG. 2

FIG. 3